# EUROPÄISCHE PATENTSCHRIFT

(11) **EP 0 762 027 B1**
(45) Veröffentlichungstag und Bekanntmachung des Hinweises auf die Patenterteilung: **17.10.2001**
(21) Anmeldenummer: 96112840.2
(22) Anmeldetag: 09.08.1996
(51) Int. Cl.: F16K 31/143, F16D 11/04

(54) **Hydraulisch und mechanisch betätigbares Wegeventil**
Hydraulically and mechanically operable directional valve
Soupape actionnée hydrauliquement et mécaniquement

(30) Priorität: 12.09.1995 DE 19533679
(43) Veröffentlichungstag der Anmeldung: 12.03.1997
(73) Patentinhaber: Mannesmann Rexroth Aktiengesellschaft, 97816 Lohr am Main (DE)
(72) Erfinder: Stellwagen, Armin, 97816 Lohr/Main (DE)

(56) Entgegenhaltungen:
- DE-B- 2 055 681
- DE-C- 344 656
- GB-A- 2 245 957
- US-A- 2 350 958
- US-A- 4 635 773
- G. NIEMANN: "Maschinenelemente, Band 1" 1981 , SPRINGER-VERLAG , BERLIN, HEIDELBERG, NEW YORK XP002019951 * Seite 393, Bild 19/14 *

## Beschreibung

Die Erfindung betrifft ein hydraulisch betätigbares Wegeventil nach dem Oberbegriff des Patentanspruchs 1.

Nach der DE 38 10 273 C2 ist der Handhebel mit einer in einem Gehäuseteil des Wegeventils gelagerten Kugel schwenkbar verbunden und zum Ein- und Auskoppeln mit bzw. aus dem Steuerkolben in der Kugel längsverschiebbar angeordnet. Bei einer solchen Ausbildung der mechanischen Notsteuerung besteht in jeder Steuerlage des Steuerkolbens die Möglichkeit, die hydraulische Hauptsteuerung mit der mechanischen Notsteuerung zu übersteuern. Da das Steuersignal für die Hauptsteuerung mit einem Steuergerät erfolgt, das unabhängig vom Ort des Wegeventils vorgesehen werden kann, während die Notsteuerung unmittelbar am Wegeventil angeordnet ist, ist es insbesondere aus Sicherheitsgründen erforderlich, eine Steuerung des Wegeventils mit Hilfe der mechanischen Notsteuerung zu unterbinden, solange das Wegeventil von der Hauptsteuerung also hydraulisch angesteuert ist.

Ein Ventil den im gemäß Oberbegriff des Patentanspruchs 1 definierten Merkmalen ist aus der US-A-2 350 958 bekannt. Dieses gattungsbildende Ventil Weist einen Steuerkolben auf, der durch einen ersten nicht näher dargestellten Betätiger und außerdem manuell über ein auf einer Welle befestigtes Betätigungsorgan betätigt werden kann. Die in einem Gehäuse drehbar gelagerte Welle liegt in Verlängerung des bei einer Betätigung um seine Achse gedrehten Steuerkolbens und ist vom Steuerkolben entkoppelt, wenn dieser vom ersten Betätiger betätigt wird und wenn am Betätigungsorgan nicht angegriffen wird.

Um über das Betätigungsorgan eine Drehbewegung auf den Steuerkolben einleiten zu können, ist auf der Welle ein Formkörper befestigt, der an seiner dem Betätigungsorgan abgewandten Seite zwei axial vorspringende dreieckige Vorsprünge aufweist. Vor der erwähnten Seite des Formkörpers ist auf der Welle ein Kupplungsteil drehbar gelagert, das an seiner dem Formkörper zugewandten Seite dreieckige Vertiefungen aufweist, in die die dreieckigen Vorsprünge des Formkörpers eingreifen. Mit seiner anderen Seite, an der es zwei rechteckige Vorsprünge aufweist, liegt das Kupplungsteil einem am Steuerkolben befestigten Kupplungsblock mit zwei rechteckigen Vertiefungen gegenüber.

Das Kupplungsteil ist mit einer zum Kupplungsblock hin durch einen an der Welle befestigten Flansch verschlossenen Sackbohrung versehen, in der sich eine Druckfeder befindet, die zwischen dem Wellenflansch und dem Kupplungsteil eingespannt ist und dieses in Richtung auf den Formkörper an der Welle zu, also im Sinne eines Eingreifens der dreieckigen Vorsprünge des Formkörpers in die dreieckigen Vertiefungen des Kupplungsteils, belastet. Außerdem ist das Kupplungsteil auf seiner Außenseite mit axial verlaufenden, beidseits geschlossenen und in gleichen Winkelabständen zueinander angeordneten Nuten versehen. Auf Höhe der Nuten ist am Gehäuse eine Rasteinrichtung mit einer Kugel befestigt, die von einer Druckfeder radial gegen das Kupplungsteil gedrückt wird.

In den Ausgangslagen von Steuerkolben und Kupplungsteil liegen sich die rechteckigen Vorsprünge des Kupplungsteils und die rechteckigen Vertiefungen des Kupplungsblocks axial gegenüber. die Kugel der Rasteinrichtung greift in eine Nut des Kupplungsteils ein. Wird nun die Welle gedreht, so dreht sich der Formkörper mit, während das Kupplungsteil durch die in eine Nut eingreifende Kugel der Rasteinrichtung an einer Drehung gehindert wird und axial verschoben wird, so daß ihre rechteckigen Vorsprünge in die rechteckigen Vertiefungen des Kupplungsblockes eingreifen, bis eine weitere axiale Verschiebung nicht mehr möglich ist. Das Kupplungsteil muß deshalb die weitere Drehbewegung der Welle mitmachen, wobei die Kugel der Rasteinrichtung aus der Nut gedrückt wird. Bei der nächsten Nut rastet die Kugel wieder ein.

Ist der Steuerkolben verdreht, so stoßen bei einer Verdrehung der Wellen die rechteckigen Vorsprünge des Kupplungsteils nach kurzem axialen Weg gegen die Stirnseite des Kupplungsblocks. Die Welle kann mit erhöhtem Kraftaufwand weitergedreht werden, wobei die Kugel der Rasteinrichtung aus der entsprechenden Nut gedrückt wird und nach einem bestimmten Drehwinkel in die nächste Nut einfällt. Nimmt nun der Steuerkolben zufälligerweise eine solche Lage, daß sich jetzt die rechteckigen Vertiefungen des Kupplungsblocks und die rechteckigen Vorsprünge des Kupplungsteils axial gegenüberliegen, so ist nun die Herstellung einer mechanischen Verbindung zwischen der Welle und dem Steuerkolben und damit eine Übersteuerung der Hauptsteuerung möglich.

Aus der GB 2 245 957 ist es bekannt, ein Ventil über ein Handrad oder einen Motor zu betätigen, wobei sich zwischen einer Welle, auf der das Handrad sitzt und einer mit dem Motor verbundenen Welle eine Kupplung befindet, deren beide Kupplungsteile durch Verdrehen einer auf einem Schraubenabschnitt der einen Welle aufgeschraubten Schraubenmutter gegen die Kraft einer zwischen den beiden Kupplungsteilen wirkenden Druckfeder axial in Eingriff miteinander gebracht werden können. Durch bloßes Drehen einer Welle wird hier kein Kupplungsteil axial verschoben.

Die Aufgabe der Erfindung besteht darin, ein Wegeventil nach dem Oberbegriff des Patentanspruchs 1 dahingehend weiterzuentwickeln, daß eine Übersteuerung der hydraulischen Hauptsteuerung durch die mechanische Notsteuerung mit Sicherheit unterbunden ist.

Nach der Erfindung wird dies mit den kennzeichnenden Merkmalen des Patentanspruchs 1 erreicht. Denn wenn sich der Steuerkolben nicht in seiner Ausgangslage befindet, kann die Blockierung des Kupplungsteils gegen Drehung auch bei Anwendung großer Kräfte nicht aufgehoben werden. Es kann deshalb nicht in eine Position gedreht werden, in der eine axiale Verschiebung um einen großen Weg und damit die Herstellung einer mechanischen Verbindung zwischen Welle und Steuerkolben möglich wäre.

Weitere Ausgestaltungen der Erfindung ergeben sich aus den weiteren Ansprüchen und der nachfolgenden Beschreibung von in der Zeichnung dargestellten Ausführungsbeispielen.

Im einzelnen zeigt die Zeichnung in
- Figur 1: den Notsteuerbereich eines nicht näher dargestellten erfindungsgemäßen Wegeventils in der Schnittebene der Betätigungsachse des Steuerkolbens,
- Figur 2: einen Schnitt nach der Linie II-II in Figur 1,
- Figur 3: 3 einen gleichen Schnitt wie Figur 2 jedoch mit einem anderen konstruktiven Aufbau der Kupplungsvorrichtung,
- Figur 4: einen Schnitt IV-IV nach Figur 3,
- Figur 5: eine Ansicht in Richtung A der Kupplungseinrichtung nach Figur 3,
- Figur 6: eine Ansicht in Richtung B eines Teiles der Kupplungseinrichtung nach Figur 3,
- Figur 7: eine Seitenansicht des Teiles nach Figur 6,
- Figur 8: einen gleichen Schnitt wie Figur 2 jedoch mit einem weiteren anderen konstruktiven Aufbau der Kupplungsvorrichtung,
- Figur 9: einen Schnitt IX-IX nach Figur 8,
- Figur 10: einen Schnitt X-X nach Figur 8,
- Figur 11: einen gleichen Schnitt wie Figur 2 jedoch mit einer anderen Ausbildung des Kupplungsteiles und
- Figur 12: einen Schnitt nach der Linie XII-XII in Figur 11.

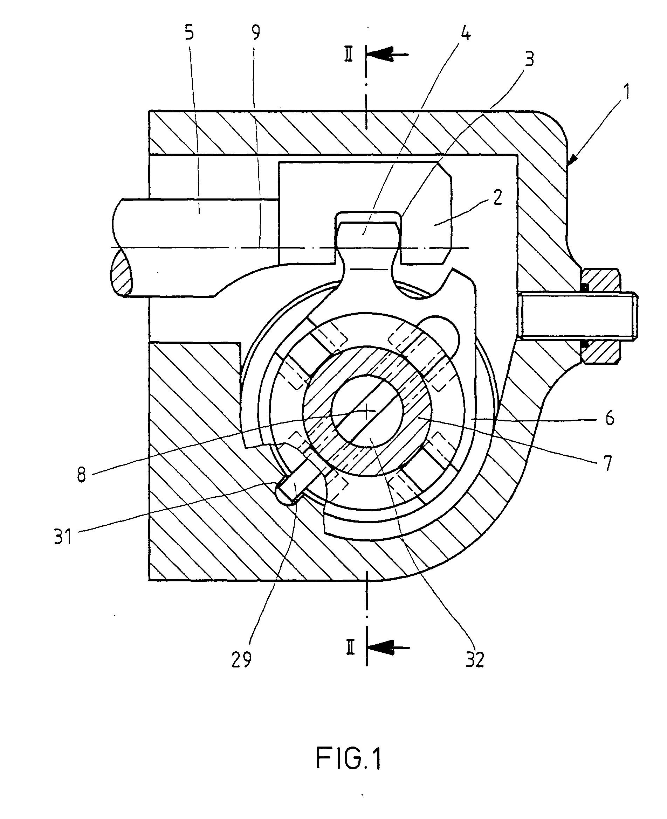

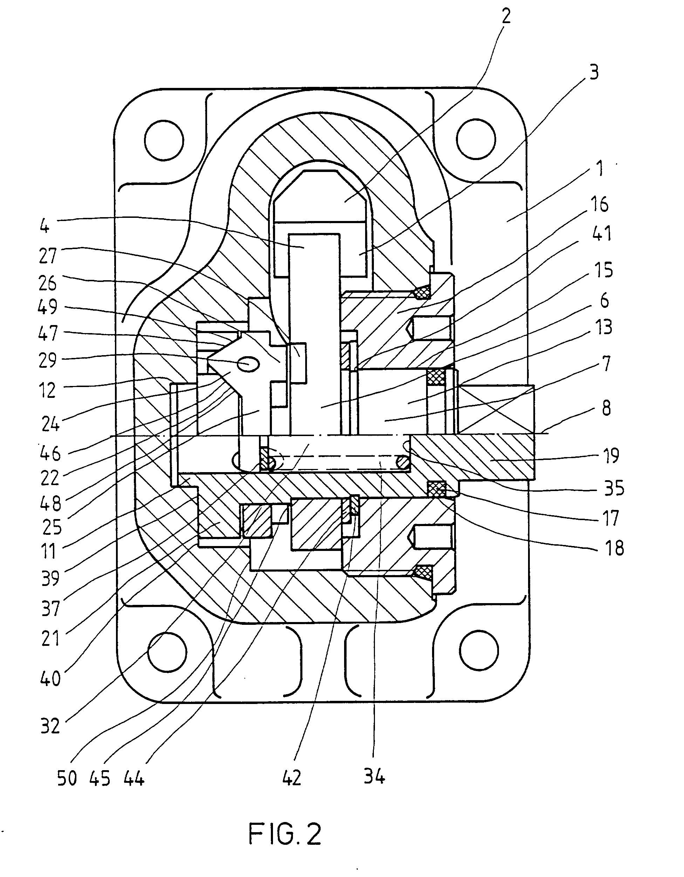

In den Figuren 1 und 2 ist mit 1 der Gehäusedeckel eines nicht näher dargestellten Ventilgehäuses eines Wegeventils bezeichnet. 2 bezeichnet das eine Ende eines Steuerkolbens 5, das eine Ausnehmung 3 aufweist, in die eine bolzenförmige Verlängerung 4 eines Verbindungsteiles 6 eingereift. Das Verbindungsteil 6 sitzt drehbar auf der Welle 7, deren Achse 8 quer zur Verschiebeachse 9 des Steuerkolbens 5 verläuft. Die Welle ist mit dem einen Ende 11 in einer Sackbohrung 12 des Gehäusedeckels und mit dem anderen Ende 13 in einer Durchgangsbohrung 15 einer Deckelverschlußschraube 16 gelagert. Zum druck- und flüssigkeitsdichten Abschluß des nach außen führenden Wellenendes ist in einer umlaufenden Nut 17 ein Dichtungsring 18 eingelegt. Das außenliegende Ende 19 der Welle ist zur Aufnahme des nicht dargestellten Betätigungshebels als Sechskant ausgebildet. In Nähe des Endes 11 weist die Welle einen Bund 21 mit über den Umfang gleichmäßig verteilten vier kegelförmigen oder keilförmigen Ausnehmungen 22 auf. In diese Ausnehmungen 22 greifen angepaßte kegelförmige oder keilförmige Vorsprünge 24 einer auf der Welle gelagerten Kupplungsscheibe 25 ein. Auf der den Vorsprüngen gegenüberliegenden Seite weist die Kupplungsscheibe Mitnahmenocken 26 auf, denen in der Ausgangslage des mit dem Steuerschieber verbundenen Verbindungsteils 6 entsprechende Ausnehmungen 27 im Verbindungsteil 6 gegenüberliegen. Die Ausgangslage der Welle wird durch die Ausgangslage der Kupplungsscheibe 25 festgelegt. Zu diesem Zweck weist die Kupplungsscheibe 25 über deren Umfang hinausragende Führungsstifte 29 auf, die in der Ausgangslage der Kupplungsscheibe in angepaßte Längsnuten 31 im Gehäusedeckel eingreifen. Die Führungsstifte 29 sind zu einem einzigen Führungsstift vereinigt, der durch eine Sackbohrung 32 der Welle mit Spiel hindurchgeführt ist. In der Sackbohrung 32 ist eine Druckfeder 34 untergebracht, die sich mit dem einen Ende am Boden 35 der Sackbohrung 32 und mit dem anderen Ende an einer Druckscheibe 37 abstützt. Die Druckscheibe liegt an dem Führungsstift 29 an, so daß die Kupplungsscheibe 25 durch die Kraft der Druckfeder 34 in Richtung des Bundes 21 und dessen kegelförmigen (keilförmigen) Ausnehmungen 22 belastet ist.

Die Welle 7 ist im Gehäusedeckel axial festgelegt, und zwar in eine Richtung durch den Bund 21, dessen der Kupplungsscheibe abgewandte Fläche 39 an der Fläche 40 des Gehäusedeckels anliegt, und in die andere Richtung durch einen in eine Wellennut 41 eingelassenen Sicherungsring 42, der sich an der Deckelverschlußschraube 16 abstützt. Der Sicherungsring 42 dient gleichzeitig zur axialen Abstützung des Verbindungsteiles 6 unter Zwischenschaltung einer Distanzscheibe 44. Auf der gegenüberliegenden Seite stützt sich das Verbindungsteil an einem Wellenabsatz 45 ab.

Wird die Welle mittels eines nicht gezeigten Betätigungshebels in die eine oder andere Drehrichtung verdreht, gleitet der schräge Flächenbereich 46 oder 47 der Ausnehmungen 22 des Wellenbundes 21 an dem schrägen Flächenbereich 48 oder 49 der kegelförmigen (keilförmigen) Vorsprünge 24 der Kupplungsscheibe 25 entlang und verschiebt hierbei die durch die in den Längsnuten 31 im Gehäusedeckel geführten Führungsstifte 29 in Drehrichtung sich abstützende Kupplungsscheibe 25 in Richtung des Verbindungsteiles 6, so daß die Mitnahmenocken 26 der Kupplungsscheibe in die Ausnehmungen 27 des Verbindungsteiles 6 eingreifen. Nach dem vollständigen Eingriff der Mitnahmenocken 26 in die Ausnehmungen 27 hat sich die Kupplungsscheibe 25 soweit in Richtung des Verbindungsteiles verschoben, daß die Führungsstifte 29 aus den Längsnuten 31 im Gehäusedeckel ausrasten und damit die Drehbewegung der Kupplungsscheibe mit der Welle freigeben.

Während der Drehbewegung der Kupplungsscheibe 25 mit der Welle stützt sich die Kupplungsscheibe je nach Drehrichtung der Welle an den Flächen 46 oder 47 des Wellenbundes 21 ab. Über das mittels der Kupplungsscheibe mit der Welle gekoppelte Verbindungsteil 6 wird über dessen bolzenförmige Verlängerung 4 der Steuerkolben entsprechend dem Drehwinkel der Welle in die gewünschte Steuerlage gegen die Kraft der nicht gezeigten den Steuerkolben in seiner Ausgangsstellung festlegenden Steuerfedern verschoben. Beim Zurückstellen des Steuerkolbens in seine Ausgangsstellung wird die Welle in die umgekehrte Drehrichtung bewegt, wobei die kraftschlüssige Anlage der schrägen Flächenbereiche 48, 49 der Vorsprünge 24 der Kupplungsscheibe 25 an den schrägen Flächenbereichen 46, 47 der Ausnehmungen 22 des Wellenbundes durch die Kraft der auf den Steuerkolben wirkenden Steuerfedern über das mit der Kupplungsscheibe 25 noch gekoppelte Verbindungsteil erhalten bleibt. Sobald die Ausgangslage des Steuerkolbens und damit auch die Ausgangslage der Kupplungsscheibe erreicht ist, rasten bei gleichzeitiger weiterer Drehbewegung der Welle um einen kleinen Winkelbereich, die mit der Kupplungsscheibe fest verbundenen Führungsstifte 29 in den Längsnuten 31 im Gehäusedeckel wieder ein, so daß sich die Kupplungsscheibe in Richtung des Wellenbundes 21 weiter verschieben kann und die Mitnahmenocken 26 aus den Ausnehmungen 27 des Verbindungsteiles 6 ausrasten können. Nachdem die Mitnahmenocken 26 der Kupplungsscheibe außer Eingriff mit den Ausnehmungen 27 des Verbindungsteiles 6 stehen, liegen die kegelförmigen (keilförmigen) Vorsprünge 24 der Kupplungsscheibe formschlüssig in den Ausnehmungen 22 des Wellenbundes 21 wieder an.

Wird der Steuerkolben hydraulisch aus seiner Ausgangslage verschoben, wird das mit diesem gekoppelte Verbindungsteil 6 auf der Welle 7 verschwenkt, so daß dessen Ausnehmungen 27 mit den Mitnahmenocken 26 der Kupplungsscheibe 25 nicht mehr fluchten. Da der Abstand zwischen Mitnahmenocken und Verbindungsteil gering ist, läßt sich in einer solchen Schwenklage des Verbindungsteiles gegenüber der Kupplungsscheibe eine Axialverschiebung der Kupplungsscheibe nicht mehr durchführen und durch die in den Längsnuten 31 im Gehäusedeckel befindlichen Führungsstifte ist die Drehbewegung der Kupplungsscheibe und damit auch der Welle blockiert. Somit ist eine mechanische Ansteuerung des Steuerkolbens bei dessen hydraulischer Ansteuerung wirkungsvoll unterbunden.

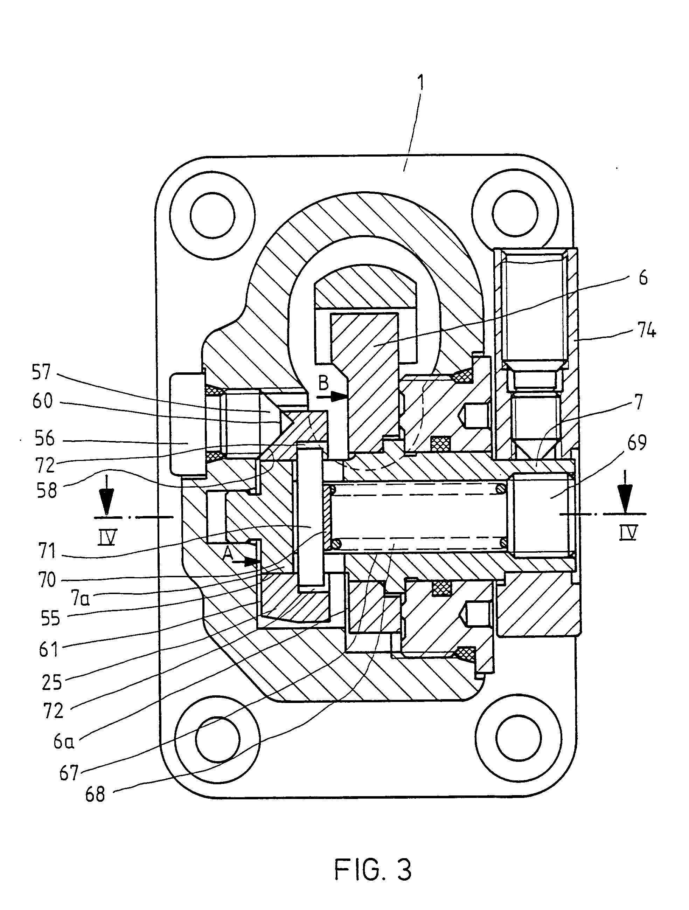

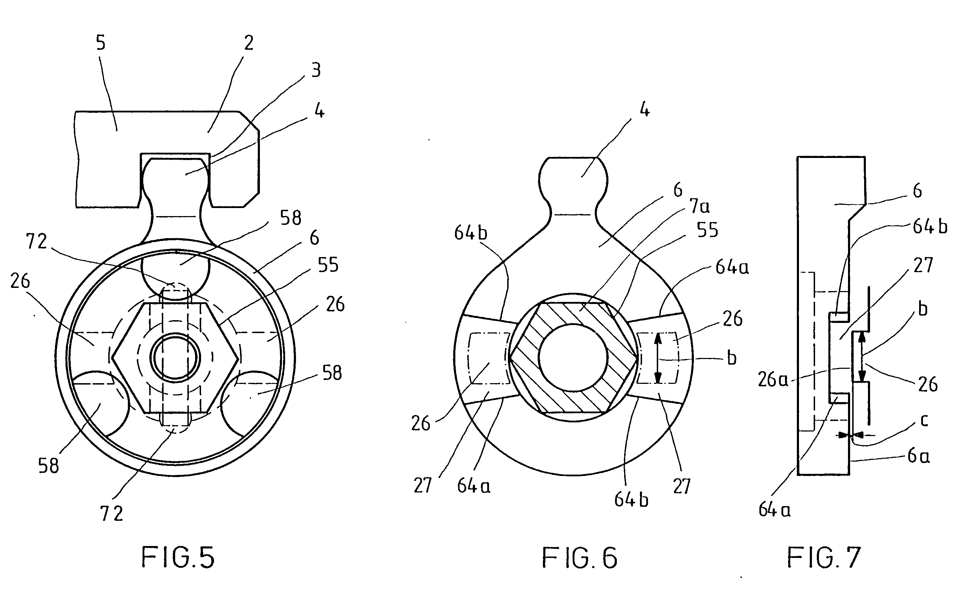

Bei dem Ausführungsbeispiel nach Figur 3 findet im Gegensatz zu dem Ausführungsbeispiel nach den Figuren 1 und 2 bei einer Axialverschiebung der Kupplungsscheibe 25 keine drehende Relativbewegung zwischen Welle und Kupplungsscheibe statt, sondern die Kupplungsscheibe ist über eine sechskantige Ausnehmung 55 (Fig. 5, 6) mit der Welle 7 mit einem angepaßten Formteil 7a drehgesichert verbunden. Die Axialverschiebung der Kupplungsscheibe 25 auf der Welle in Richtung des Verbindungsteiles 6 erfolgt durch im Gehäusedeckel 1 eingeschraubte Bolzen 56 mit kegelförmig verlaufenden Enden 57 als Abstützfläche für entsprechend ausgebildete Vertiefungen 58 in der Kupplungsscheibe 25. Bei einer Drehbewegung der Kupplungsscheibe durch die Welle gleiten die schrägen Flächen der Vertiefungen 58 an den feststehenden schrägen Flächen des Bolzenendes 57 ab, bei gleichzeitiger Axialverschiebung der Kupplungsscheibe auf der Welle. Durch die Axialverschiebung der Kupplungsscheibe auf der Welle greifen die Mitnahmenocken 26 in den Ausnehmungen 27 im Verbindungsteil 6 ein. Sobald die Vertiefungen 58 der Kupplungsscheibe 25 außerhalb der schräg verlaufenden Enden 57 der Bolzen liegen, erfolgt bei einer weiteren Verdrehung der Kupplungsscheibe durch die Welle eine Anlage der Stirnfläche 61 der Kupplungsscheibe 25 an dem ebenen Flächenabschnitt 60 der Bolzenenden. Gleichzeitig erfolgt ab der Beendigung der Axialverschiebung der Kupplungsscheibe eine Mitnahme des Verbindungsteiles 6 durch Anlage der Mitnahmenocken an den seitlichen Begrenzungswänden 64a bzw. 64b der Ausnehmungen 27 im Verbindungsteil 6. Die Begrenzungswände 64a, 64b liegen gegenüber der Breite b der Mitnahmenocken soweit auseinander, daß eine Drehbewegung des Verbindungsteiles 6 und damit eine Verschiebung des mit dem Verbindungsteil gekoppelten Steuerschiebers 5 durch Anlage der Mitnahmenocken an den Begrenzungswänden erst erfolgt, wenn der Kupplungsvorgang also die Axialbewegung der Kupplungsscheibe beendet ist. Die Kupplungsscheibe liegt mittels einer in einer Sackbohrung 67 der Welle angeordneten Druckfeder 68 in jeder Drehlage an dem Bolzen 56 kraftschlüssig an. Hierzu stützt sich das eine Ende der Druckfeder 68 an einer Verschlußschraube 69 der Sackbohrung 67 der Welle ab und mit dem anderen Ende an einer Scheibe 70, die sich an einem Stift 71 abstützt, der seinerseits in Ausnehmungen 72 der Kupplungsscheibe in axialer Richtung anliegt. Damit ist sichergestellt, daß beim Zurückdrehen der Welle aus einer Schaltlage des Steuerkolbens in die Ausgangslage, die kegelförmigen Vertiefungen 58 der Kupplungsscheibe in die kegelförmig verlaufenden Enden 57 der feststehenden Bolzen 56 einrasten und damit die Ausgangsstellung der Kupplungsscheibe mit der Welle und dem mit der Welle fest verbundenen Betätigungshebel 74 festlegen. Wird der Steuerkolben 5 hydraulisch in eine Schaltstellung verschoben, wird das Verbindungsteil 6, das mit der bolzenförmigen Verlängerung 4 in die Ausnehmung 3 des Steuerkolbenendes 2 formschlüssig eingreift, auf der in der Ausgangsstellung verbleibenden Welle 7 verschwenkt. Damit liegen die Ausnehmungen 27 des Verbindungsteils 6 außerhalb des Eingriffsbereichs der Mitnahmenocken 26 der Kupplungsscheibe 25, so daß eine Axialverschiebung der Kupplungsscheibe nur innerhalb eines begrenzten Bereiches möglich ist, und zwar entsprechend dem geringen Spiel c zwischen den Stirnflächen 26a der Mitnahmenocken und der diesen Mitnahmenocken zugekehrten Stirnfläche 6a des Verbindungsteiles 6 (Figur 7). Diese mögliche geringfügige Axialverschiebung der Kupplungsscheibe reicht nicht aus, daß die kegelförmigen Vertiefungen 58 der Kupplungsscheibe aus den Bolzenenden 57 ausrasten können. Damit ist auch ein Drehen der Welle mit Kupplungsscheibe wirkungsvoll unterbunden, so daß eine Übersteuerung des hydraulisch verstellten Steuerschiebers mittels der Handverstellung ausgeschlossen ist.

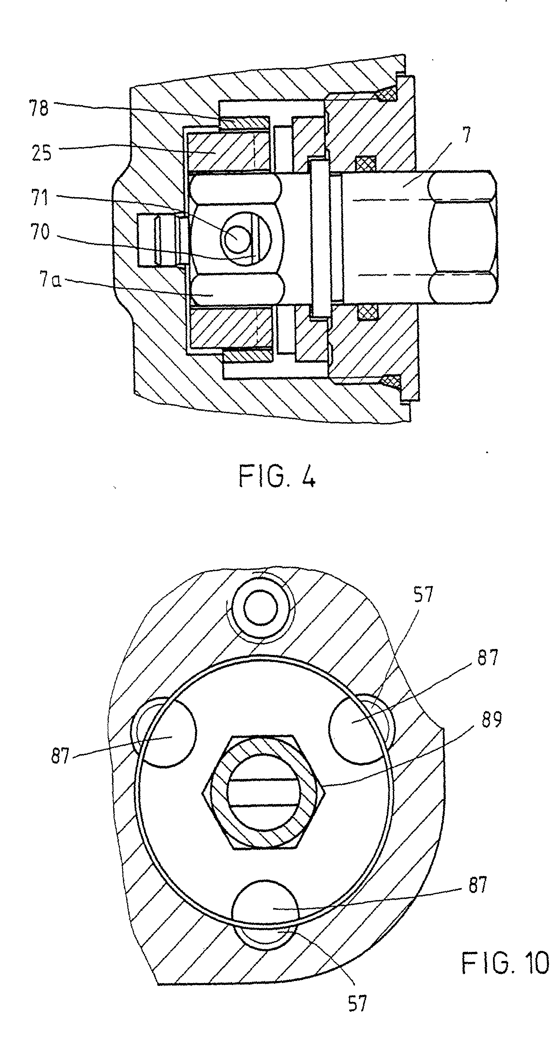

Gemäß Figur 4 ist auf der Kupplungsscheibe ein Abstandsring 78 gelagert, der in der Ausgangslage von Kupplungsscheibe und Verbindungsteil und Entkupplungsstellung der Kupplungsscheibe eine axiale Verlagerung des Verbindungsteiles 6 in Richtung der Kupplungsscheibe verhindert und damit auch einen unbeabsichtigen Kupplungsvorgang.

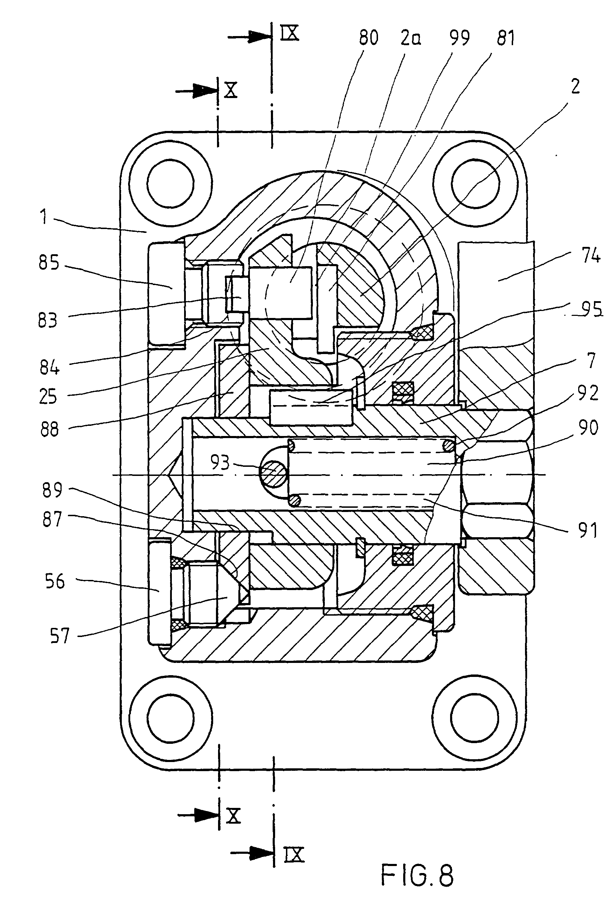

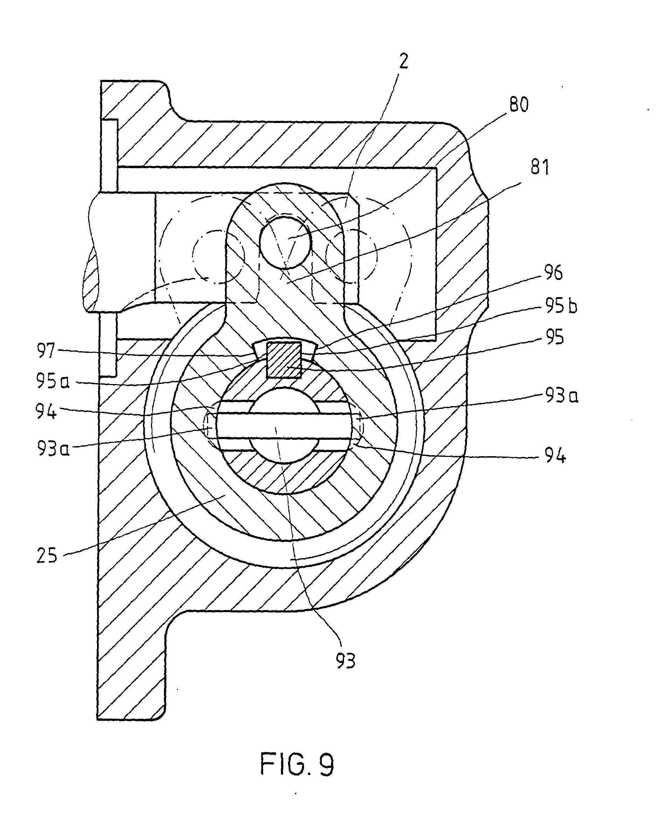

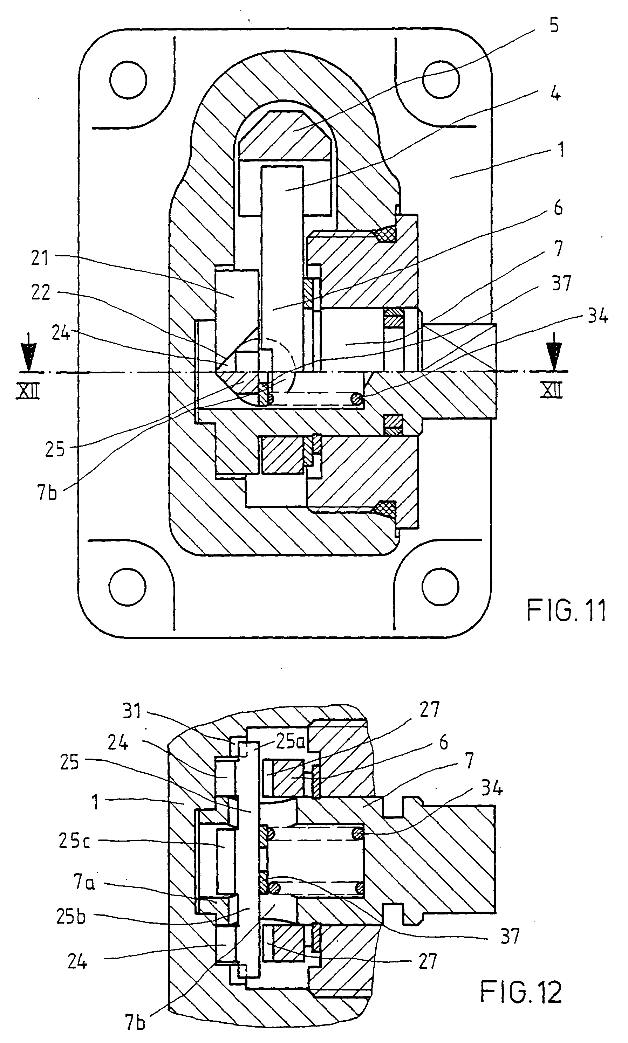

Bei dem Ausführungsbeispiel nach den Figuren 8, 9 und 10 ist im Gegensatz zu den vorhergehenden Ausführungsbeispielen kein auf der Welle verdrehbares Verbindungsteil 6 zwischen Steuerkolbenende 2 und Welle 7 vorgesehen. Bei diesem Ausführungsbeispiel weist die Kupplungsscheibe 25 einen fest mit der Kupplungsscheibe verbundenen Mitnahmebolzen 80 auf, der in einer entsprechenden Ausnehmung 81 des Steuerkolbenendes 2 durch Axialverschiebung der Kupplungsscheibe einrastet. Zur Fixierung der Ausgangslage der Kupplungsscheibe hat der Mitnahmebolzen 80 auf seiner dem Steuerkolbenende abgewandten Seite einen zylindrischen Fortsatz 83, der in einer angepaßten Bohrung 84 eines in den Gehäusedeckel 1 eingeschraubten feststehenden Schraubenbolzen 85 axial geführt ist, und zwar vor Beendigung des Kupplungsvorganges. Die Axialverschiebung der Kupplungsscheibe erfolgt ähnlich wie bei dem vorhergehenden Ausführungsbeispiel nach den Figuren 3 bis 7 über im Gehäusedeckel eingeschraubten Bolzen 56 mit kegelförmig verlaufenden Enden 57. Bei dem Ausführungsbeispiel nach den Figuren 8 bis 10 greifen allerdings keine entsprechend geformten Vertiefungen der Kupplungsscheibe, sondern kegelförmige Vertiefungen 87 einer Scheibe 88 ein, die auf der Welle axial verschiebbar angeordnet und durch eine Sechskantverbindung 89 (Fig. 10) mit der Welle drehfest verbunden ist. Die Scheibe liegt mit der den Bolzen 56 abgewandten Stirnseite an der Kupplungsscheibe kraftschlüssig an. Die kraftschlüssige Anlage wird durch die in einer Sackbohrung 90 der Welle 7 angeordnete Druckfeder 91 erzielt, die sich mit dem einen Ende am Boden 92 der Sackbohrung und mit dem anderen Ende an einem Stift 93 abstützt, der mit seinem durch die Welle mit Spiel hindurchgeführten Enden 93a (Fig. 9) an Ausnehmungen 94 der Kupplungsscheibe 25 anliegt. Die Mitnahme der Kupplungsscheibe mittels der Welle 7 erfolgt mit Hilfe der in der Welle eingelassenen Feder 95, deren seitliche Flächen 95a, 95b nach Beendigung des Kupplungsvorganges je nach Drehrichtung an den Anschlagflächen 96 oder 97 der Kupplungsscheibe anliegen und diese bei weiterer Drehung der Welle durch den Handhebel 74 mitnehmen und damit auch den Steuerkolben. Ähnlich wie bei dem vorhergehenden Ausführungsbeispiel ist die Kupplung des Steuerkolbens mit der Welle nur möglich, wenn sich der Steuerkolben in seiner Ausgangslage befindet. Sobald der Steuerkolben aus seiner Ausgangslage heraus hydraulisch verstellt wird, läßt sich die Kupplungsscheibe nur um den geringen Abstand 99 des Mitnahmebolzens 80 zur abgeflachten Fläche 2a des Steuerkolbenendes 2 axial verschieben. Diese mögliche Axialverschiebung reicht nicht aus, daß der Fortsatz 83 des Bolzens 80 die Bohrung 84 des Schraubenbolzens 85 verlassen kann. Die Kupplungsscheibe bleibt deshalb in ihrer Ausgangslage blockiert und läßt sich nicht durch Verschwenken in die Ausnehmung 81 des hydraulisch verschobenen Steuerkolbens einrasten, um dadurch die hydraulische Ansteuerung des Steuerkolbens durch die Handbetätigung übersteuern zu können.

Das Ausführungsbeispiel nach den Figuren 11 und 12 entspricht in seinem konstruktiven Aufbau weitgehend dem konstruktiven Aufbau des Ausführungsbeispiels nach den Figuren 1 und 2. Der einzige Unterschied besteht in der Ausbildung des Kupplungsteiles 25. Während bei dem Ausführungsbeispiel nach den Figuren 1 und 2 das Kupplungsteil als auf der Welle axial verschiebbare Kupplungsscheibe ausgebildet ist, besteht das Kupplungsteil nach den Figuren 11 und 12 aus einem über Radialbohrungen 7b durch die Hohlwelle 7 hindurchgeführten Stab in Form einer genormten Paßfeder 25 mit keilförmigen Vorsprüngen 24, die mit den entsprechend geformten Ausnehmungen 22 des Wellenbundes 21 zusammenarbeiten. Die Vorsprünge ergeben sich durch Ausfräsungen an der dem Wellenbund 21 zugekehrten Fläche der Paßfeder im äußeren und mittleren Bereich 25a, 25b. Der verbleibende äußere Bereich 25a der Paßfeder dient gleichzeitig zur Festlegung der Ausgangslage des Kupplungsteiles, indem dieser Bereich 25a in der Ausgangslage des Kupplungsteiles in den beiden feststehenden Längsnuten 31 im Gehäusedeckel einrastet. Die im mittleren Bereich 25b vorgesehenen Ausfräsungen sind so angeordnet, daß ein dem hohlen Wellenende 7a angepaßter zentrischer Teil 25c der Paßfeder verbleibt, der die Paßfeder in radialer Richtung festlegt. Die kraftschlüssige Anlage der Vorsprünge 24 der Paßfeder in den Ausnehmungen 22 des Wellenbundes 21 erfolgt durch die Druckfeder 34, die sich mit dem einen Ende über die Druckscheibe 37 an der Paßfeder 25 abstützt. Beim Drehen der Welle 7 mittels des nicht gezeigten Handhebels wird durch das Zusammenwirken der keilförmigen Ausnehmungen 22 am Wellenende mit den keilförmigen Vorsprüngen 24 der Paßfeder, letztere durch deren Axialführung in den Längsnuten 31 im Gehäuse zunächst axial verschoben und damit ein Einkuppeln der Paßfeder in die Ausnehmungen 27 des Verbindungsteiles 6 hergestellt. Sobald die Enden 25a der Paßfeder 25 aus den Längsführungen 31 des Gehäusedeckels ausrasten, dreht sich die Paßfeder 25 gemeinsam mit der Welle, da weiterhin ein Teilbereich der keilförmigen Ausnehmungen 22 am Wellenende mit einem Teilbereich der keilförmigen Vorsprünge 24 der Paßfeder 25 in Kraftschluß stehen. Durch die zwischenzeitlich erfolgte Kupplung der Paßfeder mit dem Verbindungsteil 6 dreht sich dieses mit der Welle und verschiebt den mit diesem gekoppelten Steuerkolben 5 aus dessen Ausgangslage in die gewünschte Steuerlage. Bei Umkehrung der Drehrichtung der Welle schnappt die Paßfeder 25 mit ihren Enden wieder in die Längsnuten 31 des Gehäusedeckels 1 ein, sobald die Ausgangslage der Paßfeder und damit auch über das Verbindungsteil 6 der Steuerkolben 5 ihre Ausgangslage erreicht haben. Damit erfolgt gleichzeitig eine Entkuppplung der Paßfeder mit dem Verbindungsteil, so daß der Steuerkolben beispielsweise hydraulisch zu betätigen ist. Seine Ausgangslage ist durch Zentrierfedern festgelegt. Wird der Steuerkolben beispielsweise hydraulisch aus seiner Ausgangslage heraus verschoben, ist wie bei dem Ausführungsbeispiel nach den Figuren 1 und 2 eine Kopplung der Welle mit dem Steuerkolben ausgeschlossen, da mit der Ansteuerung des Steuerkolbens beispielsweise hydraulisch das mit diesem gekoppelte Verbindungsteil 6 ebenfalls aus seiner Ausgangslage auf der Welle verdreht wird und somit dessen Ausnehmungen 27 nicht mehr im Eingriffsbereich der Paßfeder liegen. Bei einem Drehen der Welle kann sich die Paßfeder nur um das geringe Passungsspiel zwischen Paßfeder und Verbindungsteil axial verschieben. Ein Ausrasten der Paßfederenden 25a aus den Längsführungen 31 im Gehäusedeckel ist damit ausgeschlossen und damit auch ein weiteres Drehen der Welle durch die kraftschlüssige Verbindung mit der Paßfeder unterbunden.

Die als Radialbohrungen 7b ausgebildeten Ausnehmungen im hohlen Bereich der Welle zum Hindurchführen der Paßfeder 25 sind so groß ausgeführt, daß die während des Einkopplungsvorganges der Paßfeder in die Ausnehmungen 27 des Verbindungsteiles 6 erforderliche relative Dreh- und Axialbewegung zwischen Welle und Paßfeder durchführbar ist.

In den Figuren sind für gleiche Teile dieselben Bezugszeichen verwendet worden.

## Patentansprüche

1. Hydraulisch betätigbares Wegeventil mit einem Steuerkolben und mit einer zusätzlichen mit dem Steuerkolben (5) koppelbaren und in einem Gehäuse (1) untergebrachten mechanischen Betätigungseinrichtung, die einen Handhebel (74), der mit einer Welle (7) verbunden ist, und ein Kupplungsteil (25) aufweist, das auf der Welle (7) axial verschiebbar angeordnet ist und dessen Verdrehen um die Wellenachse (8) durch eine lösbare Blockiereinrichtung (29, 31; 57, 58; 83, 84; 25a, 31) blockierbar ist, wobei beim Drehen der Welle (7) durch den Handhebel (74) um einen kleinen Drehwinkel aus einer Ausgangsstellung heraus zunächst das Kupplungsteil (25) durch eine axiale Verschiebung um einen großen Weg die mechanische Verbindung des in seiner Ausgangslage befindlichen Steuerkolbens (2, 5) mit der Welle (7) herstellt und anschließend beim weiteren Drehen der Welle (7) der Steuerkolben (5) über das Kupplungsteil (25) in die gewünschte Steuerlage zu verschieben ist und wobei die axiale Verschiebung des Kupplungsteils (25) auf einen kleinen Weg begrenzt ist, wenn sich der Steuerkolben (5) außerhalb seiner Ausgangslage befindet, **dadurch gekennzeichnet, daß** die Wellenachse (8) quer zur Verschieberichtung des Steuerkolbens (5) verläuft und daß die Blockiereinrichtung (29, 31; 57, 58; 83, 84; 25a, 31) derart ausgebildet ist, daß sie nur durch die axiale Verschiebung des Kupplungsteils (25) über den kleinen Weg hinaus und damit nur in der Ausgangsstellung des Steuerkolbens (5) lösbar ist.

2. Wegeventil nach Anspruch 1, **dadurch gekennzeichnet, daß** das Kupplungsteil (25) zur Herstellung der mechanischen Verbindung zwischen der Welle (7) und dem Steuerkolben (5) in Richtung auf das den Handhebel (74) tragende und aus dem Gehäuse (1) herausragende Ende der Welle (7) zu axial verschiebbar ist.

3. Wegeventil nach Anspruch 1 oder 2, **dadurch gekennzeichnet, daß** das Kupplungsteil (25) bei gelöster Blockiereinrichtung durch ein Teil (29, 56, 83, 25a) dieser Blockiereinrichtung gegen eine axiale Verschiebung, durch die die mechanische Verbindung des Steuerkolbens (5) mit der Welle (7) gelöst würde, gesichert ist.

4. Wegeventil nach Anspruch 1, 2 oder 3, **dadurch gekennzeichnet, daß** das Kupplungsteil (25) durch eine Druckfeder (34) im Sinne eines Eingriffs der Teile der Blockiereinrichtung ineinander und im Sinne eines Lösens der mechanischen Verbindung zwischen dem Steuerkolben (5) und der Welle(7) axial belastet ist.

5. Wegeventil nach Anspruch 4, **dadurch gekennzeichnet, daß** sich die Druckfeder (34) in einem Hohlraum (32) innerhalb der Welle (7) befindet und sich an einem die Welle (7) querenden Teil (29, 71, 93, 25b) des Kupplungsteils (25) abstützt.

6. Wegeventil nach einem vorhergehenden Anspruch, **dadurch gekennzeichnet, daß** die Welle (7) ein mit dem Steuerkolben (2, 5) in Kraft- oder Formschluß stehendes Verbindungsteil (4, 6) trägt, das durch eine axiale Verschiebung des Kupplungsteiles (25) auf der Welle (7) mit dem Kupplungsteil (25) zu einer Dreheinheit verbindbar ist.

7. Wegeventil nach Anspruch 6, **dadurch gekennzeichnet, daß** das auf der Welle (7) axial verschiebbare Kupplungsteil (25) mit der Welle (7) eine Dreheinheit bildet und auf seiner dem Verbindungsteil (4, 6) zugekehrten Stirnseite Mitnahmenocken (26) aufweist, die bei Axialverschiebung des Kupplungsteiles in Ausnehmungen (27) im Verbindungsteil zu dessen Mitnahme beim Drehen der Welle eingreifen.

8. Wegeventil nach einem der vorhergehenden Ansprüche, **dadurch gekennzeichnet, daß** das Kupplungsteil (25) am Umfang Arretierungsstifte (29) aufweist, die in der Ausgangslage des Kupplungsteiles in entsprechend geformte Längsnuten (31) des Gehäuses (1) eingreifen, daß das Kupplungsteil (25) auf der dem Verbindungsteil (4, 6) abgewandten Seite dreieckförmige Vorsprünge (24) aufweist, die in entsprechend geformte Vertiefungen (22) eines mit der Welle (7) eine Einheit bildenden Formkörpers (21) eingreifen und daß das Kupplungsteil (25) von der Druckfeder (34) in Richtung des Formkörpers gedrückt wird.

9. Wegeventil nach einem der vorhergehenden Ansprüche, **dadurch gekennzeichnet, daß** das Kupplungsteil (25) stabförmig ausgebildet ist, in der Ausgangslage mit seinen Enden (25a) in entsprechend geformte Längsnuten (31) des Gehäuses (1) eingreift, und auf der dem Verbindungsteil (4, 6) abgewandten Seite dreieckförmige Vorsprünge (24) aufweist, die in entsprechend geformte dreieckförmig verlaufende Vertiefungen (22) eines mit der Welle (7) eine Einheit bildenden Formkörpers (21) eingreifen, daß eine Druckfeder (34) das Kupplungsteil in Richtung des Formkörpers (21) drückt und daß das Verbindungsteil (6) Ausnehmungen (27) aufweist, die das Kupplungsteil bei dessen gegen die Druckfeder (34) stattfindenden Axialverschiebung auf der Welle (7) aufnehmen.

10. Wegeventil nach Anspruch 9, **dadurch gekennzeichnet, daß** das Kupplungsteil (25) aus einer Paßfeder besteht, die die dreieckförmigen Vorsprünge (24) aufweist, die in die entsprechend geformten dreieckförmig verlaufenden Vertiefungen (22) des mit der Welle (7) eine Einheit bildenden Formkörpers (21) eingreifen.

11. Wegeventil nach einem der vorhergehenden Ansprüche, **dadurch gekennzeichnet, daß** die dem Verbindungsteil (4, 6) abgewandte Seite des Kupplungsteiles (25) kegelförmige Vertiefungen (58) aufweist, in die entsprechend geformte feststehende kegelförmige Körper (56, 57) in der Ausgangslage der Welle eingreifen, wobei das Kupplungsteil durch eine Druckfeder (68) in Richtung der kegelförmigen Körper (56, 57) gedrückt wird.

12. Wegeventil nach einem der vorhergehenden Ansprüche, **dadurch gekennzeichnet, daß** das Kupplungsteil (25) auf der Welle (7) axial verschiebbar angeordnet ist und einen Bolzen (80) aufweist, der bei Axialverschiebung des Kupplungsteiles in eine Ausnehmung (81) im Steuerkolben (2, 5) eingreift und mit diesem in Form- oder Kraftschluß bringbar ist und der auf seiner dem Steuerkolben abgewandten Seite einen Fortsatz (83) aufweist, der in der Ausgangslage des Kupplungsteils (25) in eine entsprechend geformte Ausnehmung (84) im Gehäuse (1) eingreift, daß das Kupplungsteil (25) auf seiner dem Steuerkolben (5) abgewandten Seite an einer auf der Welle (7) drehfest angeordneten Scheibe (88) durch die Kraft einer Feder (91) anliegt und daß die Scheibe (88) auf der dem Kupplungsteil abgewandten Seite kegelförmig verlaufende Ausnehmungen (87) aufweist, in die entsprechend geformte eine Axialbewegung der Scheibe gemeinsam mit dem Kupplungsteil bewirkende feststehende Körper (56, 57) formschlüssig eingreifen.

## Claims

1. A hydraulically actuatable directional control valve having a control spool and having an additional mechanical actuating device which can be coupled to the control spool (5), is accommodated in a housing (1) and is provided with a hand lever (74), connected to a shaft (7), and a coupling part (25) arranged in an axially displaceable manner on the shaft (7), the rotation of which coupling part about the shaft axis (8) is blockable by means of a releasable blocking device (29, 31; 57, 58; 83, 84; 25a, 31), whereby, upon turning of the shaft (7) by means of the hand lever (74) through a small angle from a starting position, first the coupling part (25), by means of an axial displacement over a long stroke, establishes the mechanical connection of the control spool (2, 5), which is in its starting position, to the shaft (7), and then, upon continued turning of the shaft (7), the control spool (5) can be displaced by means of the coupling part (25) into the desired control position, and whereby the axial displacement of the coupling part (25) is limited to a small stroke when the control spool (5) is not in its starting position, **characterized in that** the shaft axis (8) runs perpendicular to the direction of displacement of the control spool (5) and that the blocking device (29, 31; 57, 58; 83, 84; 25a, 31) is developed in such a manner that it can only be released by axial displacement of the coupling part (25) beyond the short stroke and hence only in the starting position of the control spool (5).

2. A directional control valve according to Claim 1, **characterized in that** the coupling part (25) for the establishing of the mechanical connection between the shaft (7) and the control spool (5) can be axially displaced towards the end of the shaft (7) carrying the hand lever (74) and projecting out from the housing (1) .

3. A directional control valve according to Claim 1 or 2, **characterized in that,** when the blocking device is released, the coupling part (25) is secured against axial displacement, through which the mechanical connection of the control spool (5) to the shaft (7) would be released, by a part (29, 56, 83, 25a) of said blocking device.

4. A directional control valve according to Claim 1, 2 or 3 **characterized in that,** the coupling part (25) is axially loaded by a compression spring (34) for the purpose of intermeshing of the parts of the blocking device and for the purpose of releasing the mechanical connection between the control spool (5) and the shaft (7).

5. A directional control valve according to Claim 4, **characterized in that** the compression spring (34) is located in a cavity (32) within the shaft (7) and rests on a part (29, 71, 93, 25b) of the coupling part (25) traversing the shaft (7).

6. A directional valve according to any of the preceding claims, **characterized in that** the shaft (7) carries, contour-locked or force-locked with the control spool (2, 5), a connecting part (4, 6) which can be connected by axial displacement of the coupling part (25) on the shaft (7) to the coupling part (25) to form a rotary unit.

7. A directional valve according to Claim 6, **characterized in that** the coupling part (25) axially displaceable on the shaft (7) forms a rotary unit with the shaft (7) and is provided on its side facing the connecting part (4, 6) with driver cams (26) which, upon axial displacement of the coupling part, engage with recesses (27) in the connecting part in order to drive the latter upon turning of the shaft.

8. A directional control valve according to any of the preceding claims, **characterized in that,** the coupling part (25) is provided on its circumference with fixing pins (29) which, in the starting position of the coupling part, engage with correspondingly shaped longitudinal grooves (31) of the housing (1), that the coupling part (25) on its side facing away from the connecting part (4, 6) is provided with triangular-shaped projections (24) which engage with correspondingly shaped depressions (22) of a contoured body (21) forming one unit with the shaft (7), and that the coupling part (25) is urged in the direction of the contoured body by the compression spring (34).

9. A directional control valve according to any of the preceding claims, **characterized in that** the coupling part (25) is developed rod-shaped, in the starting position engages at its ends (25a) with correspondingly shaped longitudinal grooves (31) of the housing (1) and is provided on its side facing away from the connecting part (4, 6)with triangular-shaped projections (24) which engage in correspondingly formed triangularly extending depressions (22) of a contoured body (21) forming one unit with the shaft (7), that a compression spring (34) urges the coupling part in the direction of the contoured body (21), and that the connecting part (6) is provided with recesses (27) which receive the coupling part when it is axially displaced on the shaft (7) against the compression spring (34).

10. A directional control valve according to Claim 9, **characterized in that** the coupling part (25) consists of a key provided with triangular projections (24) which engage in the correspondingly shaped triangularly extending depressions (22) of the contoured body (21) forming one unit with the shaft (7).

11. A directional control valve according to any of the preceding claims, **characterized in that** the side of the coupling part (25) facing away from the connecting part (4, 6) is provided with conical depressions (58) with which engage correspondingly shaped fixed conical bodies (56, 57) in the starting position of the shaft, whereby the coupling part is urged in the direction of the conical bodies (56, 57) by a compression spring (68).

12. A directional control valve according to any of the preceding claims, **characterized in that** the coupling part (25) is arranged on the shaft (7) in an axially displaceable manner and is provided with a bolt (80) which, upon axial displacement of the coupling part, engages with a recess (81) in the control spool (2, 5) and can be contour-locked or force-locked with said spool, and which is provided on its side facing away from the control spool with an extension (83) which, in the starting position of the coupling part (25), engages with a correspondingly formed recess (84) in the housing (1), that the coupling part (25), on its side facing away from the control spool (5), through the force of a spring (91), abuts a disc (88) arranged non-rotatably on the shaft (7), and that the disc (88) is provided on its side facing away from the coupling part with conically extending recesses (87) with which engage in a contour-locking manner correspondingly shaped fixed bodies (56, 57) which cause an axial movement of the disc together with the coupling part.

## Revendications

1. Un distributeur à actionnement hydraulique, doté d'un tiroir de commande et doté d'un dispositif d'actionnement supplémentaire mécanique, pouvant être raccordé avec le tiroir (5) de commande et étant disposé dans un corps (1), qui présente une manivelle (74) reliée à un arbre (7) et un élément (25) d'embrayage, lequel est disposé sur l'arbre (7) de façon à pouvoir coulisser dans la direction axiale et dont la rotation autour de l'axe (8) de l'arbre peut être bloquée par un dispositif de blocage (29, 31 ; 57, 58 ; 83, 84 ; 25a, 31) déverrouillable, cependant que, lorsque la manivelle (74) fait effectuer à l'arbre (7) un mouvement de rotation d'un angle faible à partir d'une position de départ, d'abord l'élément (25) d'embrayage établit, par un coulissement d'une grande course dans la direction axiale, le raccordement mécanique du tiroir (2, 5) de commande, se trouvant dans sa position de départ, avec l'arbre (7), et ensuite, pendant que l'arbre (7) continue à tourner, l'élément (25) d'embrayage doit amener le tiroir (5) de commande à coulisser pour atteindre la position de commande souhaitée, et cependant que le coulissement dans la direction axiale de l'élément (25) d'embrayage est limité à une course faible, tant que le tiroir (5) de commande est hors de sa position de départ, **caractérisé en ce que** l'axe (8) de l'arbre est perpendiculaire à la direction de coulissement du tiroir (5) de commande et que le dispositif de blocage (29, 31 ; 57, 58 ; 83, 84 ; 25a, 31) est conçu de façon à ne pouvoir être déverrouillé que par le coulissement de l'élément (25) d'embrayage dans la direction axiale au-delà de la course faible, et donc exclusivement dans la position de départ du tiroir (5) de commande.

2. Un distributeur conforme à la revendication n° 1, **caractérisé en ce que** l'élément (25) d'embrayage, destiné à établir le raccordement mécanique entre l'arbre (7) et le tiroir (5) de commande, peut être amené à coulisser dans la direction axiale, dans le sens de l'extrémité de l'arbre (7), qui porte la manivelle (74) et qui est protubérante par rapport au corps (1).

3. Un distributeur conforme à la revendication n° 1 ou n° 2, **caractérisé en ce que**, lorsque le dispositif de blocage est déverrouillé, un élément (29, 56, 83, 25a) de ce dispositif de blocage sécurise l'élément (25) d'embrayage contre un coulissement dans la direction axiale, qui déverrouillerait le raccordement mécanique du tiroir (5) de commande avec l'arbre (7).

4. Un distributeur conforme à la revendication n° 1, n° 2 ou n° 3, **caractérisé en ce que** l'élément (25) d'embrayage est soumis dans la direction axiale à l'effort exercé par un ressort (34) de pression, dans le sens d'un enclenchement des éléments du dispositif de blocage les uns dans les autres et dans le sens d'un déblocage du raccordement mécanique entre le tiroir (5) de commande et l'arbre (7).

5. Un distributeur conforme à la revendication n° 4, **caractérisé en ce que** le ressort (34) de pression est disposé dans une cavité (32) à l'intérieur de l'arbre (7) et est étayé par un élément (29, 71, 93, 25b) de l'élément (25) d'embrayage, qui traverse l'arbre (7).

6. Un distributeur conforme à une des revendications précédentes, **caractérisé en ce que** l'arbre (7) porte un élément (4, 6) de raccordement, qui est solidaire avec le tiroir (2, 5) de commande du fait d'une force ou de sa forme et qui peut être relié à l'élément (25) d'embrayage, par un coulissement dans la direction axiale de l'élément (25) d'embrayage sur l'arbre (7), pour former une unité de rotation.

7. Un distributeur conforme à la revendication n° 6, **caractérisé en ce que** l'élément (25) d'embrayage, qui peut être amené à coulisser dans la direction axiale sur l'arbre (7), forme une unité de rotation avec l'arbre (7) et, sur sa face orientée vers l'élément (4, 6) de raccordement, présente des cames (26) d'entraînement, qui lors d'un coulissement de l'élément d'embrayage dans la direction axiale s'enclenchent dans des évidements (27) de l'élément de raccordement, afin de l'entraîner lors de la rotation de l'arbre.

8. Un distributeur conforme à une des revendications précédentes, **caractérisé en ce que** l'élément (25) d'embrayage sur sa périphérie présente des goujons (29) d'arrêt, qui dans la position de départ de l'élément d'embrayage s'enclenchent dans des rainures (31) longitudinales de forme correspondante dans le corps (1), que l'élément (25) d'embrayage, sur sa face détournée de l'élément (4, 6) de raccordement, présente des protubérances (24) triangulaires, qui s'enclenchent dans des évidements (22) de forme correspondante dans un corps (21) façonné constituant une unité avec l'arbre (7), et que l'élément (25) d'embrayage est poussé dans le sens du corps façonné par le ressort (34) de pression.

9. Un distributeur conforme à une des revendications précédentes, **caractérisé en ce que** l'élément (25) d'embrayage est conçu sous forme d'un bâton, s'enclenche dans la position de départ par ses extrémités (25a) dans des rainures (31) longitudinales de forme correspondante dans le corps (1) et présente sur sa face détournée de l'élément (4, 6) de raccordement des protubérances (24) triangulaires, qui s'enclenchent dans des évidements (22) triangulaires de forme correspondante dans un corps (21) façonné constituant une unité avec l'arbre (7), que l'élément d'embrayage est poussé dans le sens du corps (21) façonné par un ressort (34) de pression et que l'élément (6) de raccordement présente des évidements (27), qui reçoivent l'élément d'embrayage lors de son coulissement dans la direction axiale, contre le ressort (34) de pression, sur l'arbre (7).

10. Un distributeur conforme à la revendication n° 9, **caractérisé en ce que** l'élément (25) d'embrayage est constitué d'un ressort d'ajustage, qui présente les protubérances (24) triangulaires, lesquelles s'enclenchent dans les évidements (22) triangulaires de forme correspondante du corps (21) façonné, lequel constitue une unité avec l'arbre (7).

11. Un distributeur conforme à une des revendications précédentes, **caractérisé en ce que** la face de l'élément (25) d'embrayage, qui est détournée de l'élément (4, 6) de raccordement, présente des évidements (58) coniques, dans lesquels s'enclenchent, dans la position de départ de l'arbre, des corps (56, 57) fixes coniques de forme correspondante, cependant qu'un ressort (68) de pression pousse l'élément d'embrayage dans le sens des corps (56, 57) coniques.

12. Un distributeur conforme à une des revendications précédentes, **caractérisé en ce que** l'élément (25) d'embrayage est disposé sur l'arbre (7) de façon à pouvoir coulisser dans la direction axiale et présente un goujon (80), qui lors d'un coulissement dans la direction axiale de l'élément d'embrayage s'enclenche dans un évidement (81) du tiroir (2, 5) de commande, pouvant être amené à être solidaire avec celui-ci du fait d'une force ou de sa forme, et qui sur sa face détournée du tiroir de commande présente une prolongation (83), qui dans la position de départ de l'élément (25) d'embrayage s'enclenche dans un évidement (84) de forme correspondante du corps (1), que l'élément (25) d'embrayage, sur sa face détournée du tiroir (5) de commande, vient s'ajuster grâce à la force exercée par un ressort (91) contre un disque (88), qui est disposé sur l'arbre (7) de façon à ne pouvoir effectuer aucune rotation, et que le disque (88) sur sa face détournée de l'élément d'embrayage présente des évidements (87) présentant une forme conique, dans lesquels s'enclenchent de par leur forme des éléments (56, 57) fixes de forme correspondante, qui génèrent avec l'élément d'embrayage un déplacement du disque dans la direction axiale.
